# DEMANDE DE BREVET EUROPEEN

(11) **EP 2 666 986 A1**
(43) Date de publication de la demande: **27.11.2013**
(21) Numéro de dépôt: 13164582.2
(22) Date de dépôt: 19.04.2013
(51) Int. Cl.: F01N 3/20

(54) **Systeme d'injection dans une ligne d'échappement d'un reactif gazeux**

(30) Priorité: 24.05.2012 FR 1254752
(71) Demandeur: PEUGEOT CITROËN AUTOMOBILES SA, 78140 Velizy-Villacoublay (FR)
(72) Inventeur: Jumel, Guillaume, 78290 Croissy sur Seine (FR); Artault, Mathieu, 92700 Colombes (FR)

(57) **Abrégé**

L'invention concerne un système d'injection (1',1") d'un réactif gazeux dans une ligne d'échappement (2) d'un moteur thermique comportant : - une pluralité de réservoirs (3,4,5) dont un réservoir de stockage principal (3,4) contenant un matériau de stockage solide dudit réducteur gazeux, un réservoir de stockage de démarrage (5) contenant également un matériau de stockage solide dudit réducteur gazeux, - un organe de dosage (7) comprenant au moins une première électrovanne (8) apte à libérer le réducteur gazeux vers la ligne d'échappement (2), - une unité de contrôle. Les réservoirs (3,4,5) sont directement branchés en parallèle sur une conduite de distribution commune (6'), qui est elle-même branchée à l'organe de dosage (7'), et le système d'injection comprend une deuxième électrovanne (11) disposée en amont de la conduite de distribution commune (6') et en aval des réservoirs (3,4,5), la première électrovanne (8) et la deuxième électrovanne (11) étant pilotées conjointement par l'unité de contrôle.

## Description

La présente invention concerne l'injection dans une ligne d'échappement d'un moteur thermique d'un réactif gazeux.

Ce réactif est plus particulièrement un agent réducteur, du type ammoniac, intervenant dans la dépollution des gaz d'échappement d'un moteur à combustion. Il intervient, plus précisément, sur la réduction des oxydes d'azote contenus dans les gaz d'échappement d'un moteur à combustion interne par réduction catalytique sélective (ou SCR, selon l'acronyme anglophone de « Selective Catalytic Reduction »).

L'invention s'intéresse plus particulièrement à la dépollution des gaz d'échappement des moteurs de véhicules, notamment de véhicules automobiles.

La technologie de réduction des oxydes d'azote par réduction catalytique sélective consiste à réduire les oxydes d'azote avant leur sortie du circuit d'échappement d'un moteur à combustion, à l'aide d'un agent réducteur (ou d'un précurseur d'agent réducteur) introduit dans la ligne d'échappement. Dans la suite du présent texte, on emploiera indifféremment le terme de réducteur pour désigner l'agent réducteur ou un précurseur de l'agent réducteur.

On connaît deux types de technologie SCR. Il existe la technologie dite SCR liquide, qui utilise un précurseur d'agent réducteur sous forme liquide, comme une solution aqueuse d'urée, susceptible de se transformer en ammoniac quand elle est injectée dans la ligne d'échappement. Il existe aussi la technologie dite SCR solide/gaz, où l'ammoniac est stockée dans un matériau solide susceptible de l'adsorber/de l'absorber puis de le relarguer de façon contrôlée, notamment par activation thermique. On comprendra dans la suite du texte par « stocker » ou « destocker/libérer » le phénomène permettant au matériau solide de piéger ou de libérer l'agent réducteur du type ammoniac, qu'il s'agisse d'adsorption, d'absorption et/ou de tout autre action physico-chimique aboutissant à ce résultat.

L'invention s'intéresse plus particulièrement à la technologie SCR solide/gaz. Il est ainsi connu, notamment des brevets FR-2 957 630 et FR-2 957 970, des dispositifs de dépollution de type SCR qui utilisent des réservoirs de matériau de stockage sous forme d'une ou plusieurs cartouches chacune munie de moyens de chauffage sous forme de résistances chauffantes dont l'alimentation électrique est commandée par des moyens de pilotage du type informatique/électronique afin de commander la désorption de l'agent réducteur au moment approprié et en quantités appropriées, l'agent réducteur étant ensuite acheminé par un système de conduites, via un organe de dosage comprenant une vanne commandée par les moyens de pilotage précédents, jusqu'à la ligne d'échappement. L'ensemble de ces différents organes peut être désigné sous le terme de système d'injection. Il est usuel de prévoir un ou plusieurs réservoirs, dits principaux, de tailles identiques, et un réservoir de dimensions inférieures, dit de démarrage, apte à libérer plus vite le réducteur gazeux dès le démarrage du moteur, car plus facile/plus rapide à chauffer, notamment à l'aide d'un barreau chauffant plongeant, ce réservoir de démarrage étant apte à être rechargé par un des réservoirs principaux une fois vidé.

En règle générale, à chaque arrêt du moteur, la vanne de l'organe de dosage est fermée, de façon à ce que l'agent réducteur gazeux qui se trouve dans le système de conduites « en amont », entre leurs réservoirs de stockage et l'organe de dosage, ne poursuive pas sa course vers la ligne d'échappement (On comprend dans le reste du présent texte les termes « amont » et « aval » selon le sens général d'écoulement du réactif gazeux de son réservoir de stockage jusqu'à la ligne d'échappement).

On a ainsi deux phases de fonctionnement du système d'injection: - un fonctionnement dit piloté au cours duquel on apporte de l'énergie, en l'occurrence thermique, au matériau de stockage pour libérer l'agent réducteur gazeux, et - un fonctionnement dit libre au cours duquel le système laissé libre atteint un état d'équilibre, avec une partie au moins de l'agent réducteur gazeux qui peut à nouveau être stocké dans un réservoir, notamment dans le réservoir de démarrage, qui est généralement dépourvu de clapet anti-retour contrairement aux autres réservoirs dits principaux.

Après avoir chauffé le matériau de stockage de l'un des réservoirs, le système d'injection monte en pression. Et quand on arrête le fonctionnement du système de réduction des NOx, à l'arrêt du véhicule notamment, on laisse le système d'injection libre d'évoluer vers un état d'équilibre, le système utilisant l'énergie accumulée sous forme de gaz sous pression pour stocker à nouveau celui-ci, au moins en partie, dans le matériau de stockage solide de l'un des réservoirs, notamment celui de démarrage comme évoqué plus haut, ce qui conduit à une baisse de pression dans le système d'injection. Et quand on veut réutiliser le système de réduction des NOx, au redémarrage du véhicule notamment, on doit à nouveau consommer de l'énergie (thermique) pour chauffer à nouveau le matériau de stockage afin de libérer l'agent réducteur et atteindre dans le système d'injection la pression obtenue antérieurement à l'arrêt du véhicule. On voit que la consommation énergétique d'un tel système d'injection n'est pas optimisée, puisqu'il faut ajouter de l'énergie après chaque arrêt du moteur pour retourner à l'état de pression en gaz réducteur voulu au redémarrage.

L'invention a alors pour objet de remédier à ces inconvénients, en proposant un système d'injection de réactif gazeux amélioré. L'invention a plus particulièrement pour but un pilotage dudit système qui permette de réduire la consommation énergétique du système d'injection.

L'invention a tout d'abord pour objet un système d'injection d'un réactif gazeux dans une ligne d'échappement d'un moteur thermique comportant : - une pluralité de réservoirs dont un réservoir de stockage principal contenant un matériau de stockage solide dudit réducteur gazeux, un réservoir de stockage de démarrage, contenant également un matériau de stockage solide dudit réducteur gazeux, - un organe de dosage comprenant au moins une première électrovanne dite de sortie apte à libérer le réducteur gazeux vers la ligne d'échappement, - une unité de contrôle, tel que les réservoirs sont branchés sur une conduite de distribution commune, qui est elle-même branchée à l'organe de dosage, et tel que le système d'injection comprend une deuxième électrovanne dite d'entrée disposée en amont de la conduite de distribution commune et en aval des réservoirs, la première électrovanne et la deuxième électrovanne étant pilotées conjointement par l'unité de contrôle.

Tous les réservoirs peuvent être branchés en parallèle sur la conduite de distribution commune. Ils peuvent être branchés directement via des connecteurs dits rapides encliquetables, ou via des conduites secondaires. Certains des réservoirs peuvent être branchés aussi en série entre eux : ainsi, dans une configuration avec x réservoirs principaux et un réservoir de démarrage, ils peuvent tous être branchés directement sur la conduite commune, ou les x réservoirs principaux peuvent être montés en parallèle, et tous être connectés en série avec le réservoir de démarrage lui-même connecté à la conduite commune. Dans ce cas, les réservoirs principaux n'alimentent la conduite commune que via le réservoir de démarrage. Tout autre montage série/parallèle des différents réservoirs est également possible.

Le réservoir de démarrage est conçu de façon à pouvoir libérer plus vite l'agent réducteur, notamment sous activation thermique, que le ou les réservoirs dits principaux. On peut obtenir ce résultat soit en utilisant un réservoir de démarrage de dimensions inférieures, donc avec une quantité de matériau solide moins importante et plus facile à chauffer, soit en choisissant une nature de matériau solide qui est apte à libérer plus vite le gaz réducteur, à iso-volume de réservoir, que le matériau solide choisi pour les réservoirs principaux.

Le principe de cette invention est de pouvoir stocker l'énergie lors d'une phase d'utilisation du système de dépollution, en fermant cette deuxième vanne additionnelle amont à l'arrêt du moteur, de manière à pouvoir la restituer lors d'une phase ultérieure de fonctionnement en ouvrant les deux vannes. En fermant les deux vannes à l'arrêt, on vient « piéger » le gaz réducteur en amont de l'organe de dosage, le conservant ainsi sous pression jusqu'à ce que le moteur redémarre. Cette configuration empêche ainsi le gaz réducteur de se « re-stocker » dans le réservoir de démarrage, ou tout au moins de limiter l'ampleur de ce « re-stockage », et donc de garder le système sous une pression de gaz suffisante pour pouvoir libérer le gaz au moment voulu avec pas/peu d'inertie.

Le gain est double : - d'une part, sur le plan énergétique, puisqu'on consomme moins d'énergie thermique obtenue par une alimentation électrique des moyens chauffants des réservoirs, et qu'ainsi on contribue à émettre moins de CO₂, - d'autre part, sur le plan cinétique, puisque la pression nécessaire dans le système d'injection est obtenue extrêmement vite dès qu'on en a besoin, et qu'on peut ainsi injecter l'agent réducteur dans la ligne d'échappement sans attendre la libération du gaz de l'un des réservoirs et la montée en pression dans les conduites. Le fait d'utiliser une conduite commune sur laquelle sont branchés directement tous les réservoirs permet de gagner en longueur/volume de conduites sur l'ensemble du système d'injection, en supprimant ou limitant toute conduite « secondaire » entre le/les réservoirs et l'organe de dosage. On peut ainsi garder le gaz réducteur avec un niveau de pression suffisant dans un volume de conduite qui reste restreint/maîtrisé entre les deux vannes selon l'invention.

Selon un mode de réalisation, l'électrovanne d'entrée est disposée à la sortie du réservoir de démarrage. Ici, le gaz réducteur, à l'arrêt du moteur, est piégé pour l'essentiel dans la conduite commune. On peut ainsi limiter/éviter tout « re-stockage » du réducteur gazeux dans le réservoir de démarrage.

Selon un autre mode de réalisation, les réservoirs comprennent un réservoir dit gazeux de stockage sous forme gazeuse du réducteur gazeux, et l'électrovanne d'entrée est disposée à la sortie dudit réservoir gazeux. Dans cette configuration, on vient piéger le gaz réducteur, à l'arrêt du moteur, dans ce réservoir (qui ne contient aucun matériau solide de stockage, il s'agit ici plus d'un réservoir tampon définissant un certain volume vide au départ pour le gaz). De préférence, ce réservoir tampon est branché sur la conduite commune directement, c'est-à-dire que le gaz qu'il délivre alimente la conduite commune sans avoir à traverser un autre réservoir du système (tout comme le réservoir de démarrage).

De préférence, un clapet anti-retour est disposé en sortie du(des) réservoirs principal(aux)et en amont de la conduite de distribution commune. Ainsi, on empêche le gaz de se « re-stocker » dans lesdits réservoirs, donc on le maintient sous pression, selon les variantes, soit dans un réservoir de gaz tampon, soit dans la conduite commune, ou encore dans l'ensemble du volume de ce réservoir tampon et du volume de la conduite commune.

De préférence, l'unité de contrôle est reliée au, ou fait partie du, calculateur de contrôle commande du moteur.

Comme évoqué plus haut, la deuxième vanne est avantageusement fermée à l'arrêt du moteur et ouverte à l'allumage du moteur.

L'invention a également pour objet un procédé qui peut mettre en oeuvre un tel système d'injection. Il s'agit notamment d'un procédé d'injection dans une ligne d'échappement d'un moteur thermique d'un réactif gazeux utilisant : - une pluralité de réservoirs dont un réservoir de stockage principal contenant un matériau de stockage solide dudit réducteur gazeux, un réservoir de stockage de démarrage, de dimensions inférieures, contenant également un matériau de stockage solide dudit réducteur gazeux, - un organe de dosage comprenant au moins une première électrovanne dite de sortie apte à libérer le réducteur gazeux vers la ligne d'échappement, - une unité de contrôle, où l'on branche les réservoirs sur une conduite de distribution commune, qui est elle-même branchée à l'organe de dosage, où le système d'injection comprend une deuxième électrovanne dite d'entrée disposée en amont de la conduite de distribution commune et en aval des réservoirs, et où l'on pilote conjointement la première vanne et la deuxième vanne par une unité de contrôle.

Ainsi, lorsque le moteur thermique est en marche, l'unité de contrôle pilote l'ouverture partielle ou complète de la deuxième vanne, afin de permettre au gaz réducteur sous pression provenant de la conduite commune et/ou du réservoir gazeux d'alimenter l'organe de dosage.

Et lorsque le moteur thermique est à l'arrêt, l'unité de contrôle pilote la fermeture de la deuxième vanne, afin de piéger le gaz réducteur comme évoqué plus haut.

Avantageusement, lorsque le moteur thermique est à l'arrêt, l'unité de contrôle pilote la fermeture des première et deuxième vannes, de sorte que le réactif gazeux présent en amont de l'organe de dosage y reste piégé jusqu'à l'allumage du moteur.

L'invention a également pour objet le système de dépollution des gaz d'échappement par réduction catalytique des NOx intégrant le système d'injection en agent réducteur décrit précédemment. Elle a également pour objet tout véhicule automobile intégrant un tel système de dépollution.

D'autres caractéristiques et avantages de l'invention apparaîtront à la lecture de la description détaillée qui suit de deux modes de réalisation non limitatifs de l'invention, donnés à titre d'exemples uniquement et en référence aux figures suivantes qui représentent :
- Figure 1 : une représentation d'un système d'injection connu ;
- Figure 2 : une représentation d'un système d'injection selon un premier mode de réalisation de l'invention ;
- Figure 3 : une représentation d'un système d'injection selon un deuxième mode de réalisation de l'invention ;
- Figure 4 : un graphe représentant l'évolution de la pression de gaz réducteur dans le système d'injection connu selon la figure 1, selon que le moteur thermique est à l'arrêt ou en marche ;
- Figure 5 : un graphe représentant l'évolution de la pression de gaz réducteur dans le système d'injection de l'invention selon la figure 2 et la figure 3, selon que le moteur thermique est à l'arrêt ou en marche.

Toutes ces figures sont très schématiques, et les différents composants représentés ne sont pas nécessairement à l'échelle pour en faciliter la lecture. Les mêmes références gardent la même signification d'une figure à l'autre.

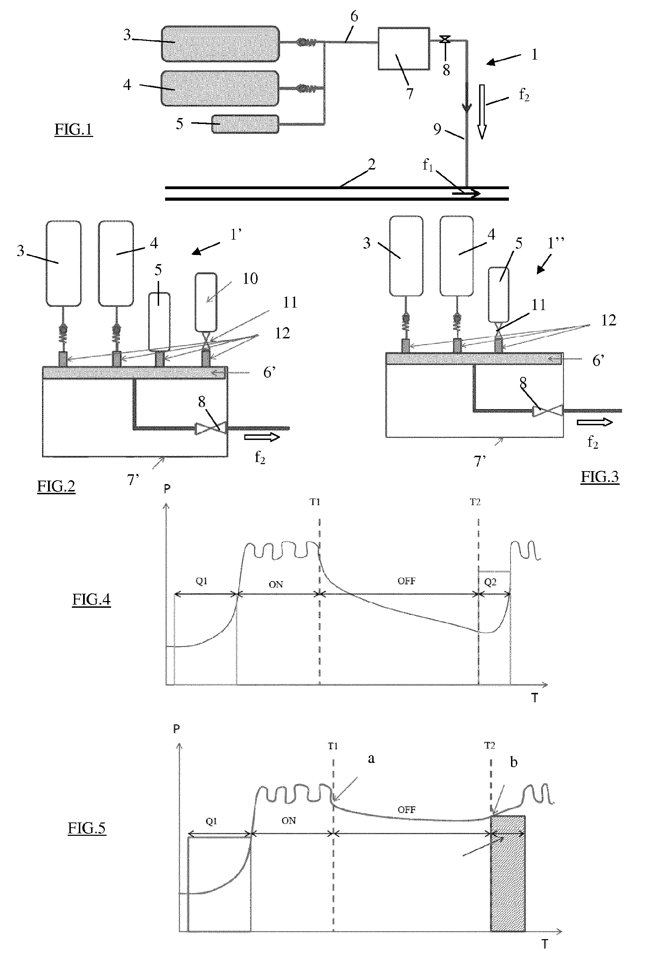

La figure 1 est une représentation simplifiée d'un système d'injection 1 connu d'ammoniac gazeux dans une ligne d'échappement 2 d'un moteur thermique d'un véhicule automobile. (les gaz d'échappement circulent dans la ligne d'échappement selon la direction indiquée par la flèche f1). Le système d'injection comprend deux réservoirs (appelés aussi communément cartouches, du fait de leur enveloppe extérieure sensiblement cylindrique) - dits principaux - 3,4 identiques entre eux et un réservoir 5 dit de démarrage également sous forme sensiblement cylindrique mais définissant un volume nettement inférieur à celui des réservoirs principaux. Ces trois réservoirs contiennent un matériau solide pulvérulent sous forme d'un sel apte à stocker puis libérer par apport thermique de façon réversible l'ammoniac gazeux selon l'équilibre suivant :

XCl₂ + y NH₃ ↔ X(NH₃)yCl₂, avec X pouvant être Mg, Ba ou Sr et Y pouvant aller de 1 à 8

De façon connue, ces trois réservoirs sont en connexion fluidique avec une conduite commune dite amont 6 elle-même connectée à un organe de dosage 7, qui alimente par une électrovanne 8 de sortie à ouverture variable pilotée par une unité de contrôle (non représentée) une conduite 9 dite avale débouchant dans la ligne d'échappement 2, la flèche f2 symbolisant la direction générale de l'ammoniac provenant des réservoirs 3,4,5 (l'amont) vers la ligne d'échappement 2 (l'aval). L'injection d'ammoniac est faite dans la ligne 2 en amont, par rapport à l'écoulement des gaz d'échappement selon la flèche f1, d'un dispositif SCR (non représenté) afin de réduire les NOx contenus dans ceux-ci et être ainsi conforme aux normes en vigueur.

Pour déclencher la libération du NH₃, l'unité de contrôle est apte à piloter des résistances externes entourant les réservoirs principaux 3,4 et une résistance intérieure sous forme d'un barreau plongeant pour le réservoir de démarrage 5. Les réservoirs principaux 3 et 4 sont équipés en sortie de clapets anti-retour, le réservoir de démarrage 5 en est dépourvu. L'ensemble des réservoirs est fixé à un module de support lui-même fixé au châssis du véhicule et portant également l'organe de dosage 7.

La figure 4 représente le niveau de pression P (axe des ordonnées) dans la conduite 6 en fonction du temps T, selon que le moteur est en marche ou à l'arrêt : quand le moteur démarre, pendant la période Q1, l'unité de contrôle commande le chauffage de l'un des réservoirs afin que la quantité ad hoc de NH₃ soit libérée, et le système d'injection monte en pression. Puis le système de dépollution dans son ensemble se met à fonctionner avec injection dans la ligne 2 de l'ammoniac dans la quantité voulue pendant la période « ON ». Enfin, on coupe le moteur à l'instant T1 pendant une période « OFF », et le système d'injection est laissé libre d'évoluer vers un équilibre en pression : on voit dans le graphe que la pression P diminue progressivement vers un niveau minimal, le système utilisant l'énergie accumulée sous forme d'ammoniac sous pression pour « re-stocker » tout ou partie de l'ammoniac dans le réservoir de démarrage 5 qui est dépourvu de clapet anti-retour. Quand on redémarre le moteur du véhicule au temps T2, il faut à nouveau consommer une quantité d'énergie pendant une période Q2 pour libérer à nouveau du NH₃ d'un des réservoirs en le chauffant, et refaire monter en pression le système d'injection. L'énergie utilisée pour libérer l'ammoniac n'est ainsi pas stockée.

La figure 2 est un système d'injection 1' selon un premier mode de réalisation de l'invention. Les trois changements par rapport à l'architecture de la figure 1 sont les suivants : - d'une part, on a ajouté un quatrième réservoir 10 qui est vide, sans matériau solide de stockage, et qui est destiné à contenir de l'ammoniac gazeux en tant que réservoir tampon, - d'autre part, les quatre réservoirs sont tous branchés en parallèle sur un rail de distribution 6' qui est une conduite de faible section débouchant dans l'organe de dosage 7' et qui peut même y être complètement intégré. On peut connecter le rail 6' à l'organe de dosage 7' par un connecteur dit rapide, encliquetable et étanche, du type de ceux utilisés dans les lignes de carburant de véhicules automobiles. Pour permettre la connexion des réservoirs à ce rail, on prévoir des connecteurs dits connecteurs rapides 12, du type de celui évoqué plus haut, à la sortie de chacun des réservoirs, - enfin, on ajoute une autre électrovanne dite d'entrée 11 qui est disposée en aval du réservoir tampon 10 et en amont du rail 6'. Cette électrovanne 11 est également pilotée par l'unité de contrôle, comme la vanne 8 de sortie de l'organe de dosage. Elle peut être de type à ouverture variable comme la vanne de sortie ou être une vanne de type tout-ou-rien.

Le fonctionnement de ce système est illustré par le graphe de la figure 5, avec les mêmes conventions de représentation que celui de la figure 4 : Au démarrage du véhicule, on chauffe le réservoir de démarrage 5 pendant la période Q1, pour libérer de l'ammoniac et faire monter le système en pression, et l'électrovanne d'entrée ajoutée 11 est en position ouverte. Le système de dépollution fonctionne ensuite pendant une période « ON » comme précédemment. Puis à l'instant T1 on coupe le moteur, et l'unité de contrôle ferme la vanne 11 (action a), permettant de garder sous pression une bonne partie de l'ammoniac libéré des réservoirs et n'alimentant plus la ligne d'échappement, la vanne 8 étant fermée à l'arrêt du véhicule : si une partie de l'ammoniac libéré peut se ré-stocker encore dans le réservoir de démarrage 5, une autre portion significative est piégée dans le réservoir tampon 10.

On voit à la figure 5 que la période « OFF » d'arrêt du moteur est accompagnée d'une chute en pression d'ammoniac dans le système d'injection bien moindre que dans le cas précédent : quand le moteur est rallumé au temps T2, on peut alors, en ouvrant la vanne 11 (action b), libérer en un temps très court de l'ammoniac et alimenter l'organe de dosage 7', donc être capable d'injecter très vite de l'ammoniac, disponible immédiatement puisque stocké sous forme gazeuse, dans la ligne d'échappement 2 en ouvrant à la fois la vanne d'entrée 11 et la vanne de sortie 8, en limitant de façon significative, voire en supprimant l'apport énergétique de la période Q2.

Le dimensionnement du rail de distribution 6' et du réservoir tampon 10 est choisi de façon à être au plus égal au volume des conduites « amont » à l'organe de dosage du système d'injection connu antérieur, ce dimensionnement garantissant que le mode de fonctionnement du système ne sera pas, par ailleurs, changé ou perturbé par l'ajout du réservoir tampon : pour ce faire, on peut, comme déjà indiqué, diminuer la section du rail 6' par rapport à la conduite 6 connue, on peut diminuer voire supprimer (comme c'est le cas représenté en figure 2) toute conduite intermédiaire entre chaque réservoir et ce rail 6'.

La figure 3 est un autre mode de réalisation du système d'injection 1" selon l'invention, qui présente, par rapport au mode de réalisation de la figure 2, deux changements : - d'une part le réservoir tampon est supprimé, - d'autre part la vanne d'entrée 11 est déplacée pour être disposée en aval du réservoir de démarrage 5. Dans cette configuration, quand le moteur est à l'arrêt (période « OFF »), la vanne 11 est fermée, et l'ammoniac libéré est piégé substantiellement dans le rail 6' et éventuellement dans les conduites secondaires,-quand elles sont présentes-, connectant les réservoirs 3,4,5 au rail 6'. L'ammoniac ne peut plus « remonter » dans le réservoir de démarrage 5. Une fois le moteur redémarré, la vanne 11 est ouverte, et le rail peut immédiatement relarguer l'ammoniac via l'organe de dosage 7' dans la ligne d'échappement 2, avec les mêmes avantages qu'avec le premier mode de réalisation.

L'invention, en positionnant de façon approprié une deuxième vanne d'entrée en amont de l'organe de dosage, en ajustant le dimensionnement et la configuration des conduites « amont » amenant l'ammoniac des réservoirs à l'organe de dosage, et en ajoutant un réservoir tampon additionnel optionnel, règle ainsi très précisément le volume d'ammoniac piégé dans le système d'injection hors réservoir(s) quand le moteur est à l'arrêt : l'ammoniac gazeux reste sous pression et peut donc être injecté très rapidement au redémarrage du moteur sans apport thermique, ou avec un apport thermique moindre, et/ou avec un apport thermique différé dans le temps (pour que l'ammoniac des réservoirs prenne le relai par chauffage de ceux-ci pour alimenter l'organe de dosage, une fois l'ammoniac contenu dans le volume piégé est consommé).

A noter que l'invention s'applique également à un système d'alimentation en ammoniac comprenant plus de deux réservoirs principaux, ou un seul réservoir principal. Il peut aussi s'appliquer aussi un système d'alimentation dépourvu de réservoir de démarrage.

A noter que le système d'injection selon l'invention peut également contenir différents organes et composants, notamment un ou des capteurs de pression, un ou des capteurs de température, un ou des limitateurs de débit de gaz du type col sonique, les capteurs étant connectés à l'unité de contrôle afin de maitriser au mieux le pilotage de la libération d'ammoniac dans la ligne quand le moteur marche. De même, la ligne d'échappement peut également être munie de capteurs divers.

## Revendications

1. Système d'injection (1',1") d'un réactif gazeux dans une ligne d'échappement (2) d'un moteur thermique comportant : - une pluralité de réservoirs (3,4,5) dont un réservoir de stockage principal (3,4) contenant un matériau de stockage solide dudit réducteur gazeux, un réservoir de stockage de démarrage (5) contenant également un matériau de stockage solide dudit réducteur gazeux, - un organe de dosage (7') comprenant au moins une première électrovanne (8) dite de sortie apte à libérer le réducteur gazeux vers la ligne d'échappement (2) - une unité de contrôle, **caractérisé en ce que** les réservoirs (3,4,5) sont branchés sur une conduite de distribution commune (6'), qui est elle-même branchée à l'organe de dosage (7'), et **en ce que** le système d'injection comprend une deuxième électrovanne (11) dite d'entrée disposée en amont de la conduite de distribution commune (6') et en aval des réservoirs (3,4,5), la première électrovanne (8) et la deuxième électrovanne (11) étant pilotées conjointement par l'unité de contrôle, et un clapet anti-retour étant disposé en sortie du(des) réservoirs principal(aux) (3,4) et en amont de la conduite de distribution commune (6').

2. Système (1',1") selon la revendication précédente, **caractérisé en ce que** l'électrovanne d'entrée (11) est disposée à la sortie du réservoir de démarrage (5).

3. Système (1',1") selon la revendication 1, **caractérisé en ce que** les réservoirs comprennent un réservoir dit gazeux (10) de stockage sous forme gazeuse du réducteur gazeux, et **en ce que** l'électrovanne d'entrée (11) est disposée à la sortie dudit réservoir gazeux (10).

4. Système (1',1") selon l'une des revendications précédentes, **caractérisé en ce que** l'unité de contrôle est reliée au, ou fait partie du, calculateur de contrôle commande du moteur.

5. Système (1',1") selon l'une des revendications précédentes, **caractérisé en ce que** la deuxième vanne (11) est fermée à l'arrêt du moteur et ouverte à l'allumage du moteur.

6. Procédé d'injection dans une ligne d'échappement (2) d'un moteur thermique d'un réactif gazeux utilisant : - une pluralité de réservoirs (3,4,5) dont un réservoir de stockage principal (3,4) contenant un matériau de stockage solide dudit réducteur gazeux, un réservoir de stockage (5) de démarrage contenant également un matériau de stockage solide dudit réducteur gazeux, - un organe de dosage (7') comprenant au moins une première électrovanne (8) dite de sortie apte à libérer le réducteur gazeux vers la ligne d'échappement (2), - une unité de contrôle, **caractérisé en ce qu'**on branche les réservoirs (3,4,5) sur une conduite de distribution commune (6'), qui est elle-même branchée à l'organe de dosage (7'), **en ce que** le système d'injection comprend une deuxième électrovanne (11) dite d'entrée disposée en amont de la conduite de distribution commune (6') et en aval des réservoirs, et **en ce qu'**on dispose un clapet anti-retour en sortie du(des) réservoirs principal(aux) (3,4) et en amont de la conduite de distribution commune (6'), et **en ce qu'**on pilote conjointement la première vanne (8) et la deuxième vanne (11) par une unité de contrôle.

7. Procédé selon la revendication précédente, **caractérisé en ce que**, lorsque le moteur thermique est en marche, l'unité de contrôle pilote l'ouverture partielle ou complète de la deuxième vanne (11).

8. Procédé selon la revendication 6 ou la revendication 7, **caractérisé en ce que**, lorsque le moteur thermique est à l'arrêt, l'unité de contrôle pilote la fermeture de la deuxième vanne (11).

9. Procédé selon l'une des revendications 6 à 8, **caractérisé en ce que**, lorsque le moteur thermique est à l'arrêt, l'unité de contrôle pilote la fermeture des première et deuxième vannes(8,11), et **en ce que** le réactif gazeux présent dans le dispositif d'injection (1',1") en amont de l'organe de dosage (7') y reste piégé jusqu'à l'allumage du moteur.
